# EUROPÄISCHE PATENTSCHRIFT

(11) **EP 0 664 739 B1**
(45) Veröffentlichungstag und Bekanntmachung des Hinweises auf die Patenterteilung: **03.07.1996**
(21) Anmeldenummer: 93922937.3
(22) Anmeldetag: 12.10.1993
(51) Int. Cl.: B29C 33/60, B24D 3/28, H01R 39/26, H01R 43/00, B29K 61/04, B29K 103/08, B29L 31/36

(54) **VERFAHREN ZUM HERSTELLEN VON SCHLEIFKÖRPERN FUR ELEKTRISCHE KOLLEKTOREN OD.DGL.**
PROCESS FOR PRODUCING SLIDING MEMBERS FOR ELECTRIC COLLECTORS OR THE LIKE
PROCEDE DE FABRICATION DE CORPS FROTTANTS POUR COLLECTEURS ELECTRIQUES OU ANALOGUE

(30) Priorität: 13.10.1992 DE 4234497
(43) Veröffentlichungstag der Anmeldung: 02.08.1995
(73) Patentinhaber: HOFFMANN & CO. ELEKTROKOHLE GESELLSCHAFT M.B.H., A-4823 Steeg (AT)
(72) Erfinder: HÖLL, Johann, A-4830 Hallstatt (AT); Grabner, Herbert, A-4820 Bad Ischl (AT)
(74) Vertreter: Glawe, Delfs, Moll & Partner
(86) Internationale Anmeldenummer: EP9302803
(87) Internationale Veröffentlichungsnummer: WO9408771

(56) Entgegenhaltungen:
- US-A- 3 510 710
- PATENT ABSTRACTS OF JAPAN vol. 13, no. 142 (E-739)(3490) 7. April 1989 & JP,A,63 302 744 (HITACHI CHEM CO. LTD.) 9. Dezember 1988
- PATENT ABSTRACTS OF JAPAN vol. 16, no. 285 (E-1222)(5328) 24. Juni 1992 & JP,A,04 071 177 (SHIN ETSU POLYMER CO. LTD.) 5. März 1992
- JAPANESE PATENTS GAZETTE Section Ch, Week 8630, 3. September 1986 Derwent Publications Ltd., London, GB; Class L, Page 12, AN 86-192435/30 & JP,A,61 124 080 (HITACHI CHEMICAL K.K.) 11. Juni 1986

## Beschreibung

Die Erfindung betrifft ein Verfahren zum Herstellen von Schleifkörpern für elektrische Kollektoren, Kontaktbürsten, Stromabnehmer od.dgl., bei dem eine Pulvermasse, die mindestens Graphit und ein Kunstharzbindemittel enthält, in einer Preßform mit mindestens einem Preßstempel zu einem Formkörper gepreßt wird und der Formkörper anschließend bei einer Sintertemperatur, bei der das Bindemittel erweicht und die Pulvermasse bindet, wärmebehandelt wird.

Bei der praktischen Durchführung eines solchen Verfahrens wurde gefunden, daß die verwendeten Preßstempel sehr rasch verschmutzen und in kurzen Zeitabständen gereinigt und von Rückständen befreit werden müssen. Der Grund hierfür liegt darin, daß beim Pressen Reibungswärme zwischen dem Preßstempel und den von ihm beaufschlagten Pulverkörnern erzeugt wird, die das Kunstharzbindemittel im Bereich des Preßstempels zum Schmelzen bringt, so daß das Bindemittel an der Stempeloberfläche festklebt und auch andere Bestandteile der Pulvermasse zum Festhaften bringt. Ein solchermaßen mit Rückständen behafteter Preßstempel erzeugt bei den nachfolgenden Preßvorgängen keine saubere Oberfläche des zu pressenden Formkörpers mehr und muß deshalb in relativ kurzen Abständen gereinigt werden.

Der Erfindung liegt die Aufgabe zugrunde, ein Verfahren der genannten Art so zu verbessern, daß die Reinigungsintervalle der verwendeten Preßwerkzeuge wesentlich verlängert werden können und trotzdem Schleifkörper mit verbesserter Oberflächenqualität erzeugt werden können.

Erfindungsgemäß ist ein Verfahren der angegebenen Art dadurch gekennzeichnet, daß eine Schicht eines kunstharzfreien Trennmittels zwischen der Pulvermischung und dem Preßstempel angeordnet wird. Es wurde gefunden, daß bei geeigneter Wahl des Trennmittels das Anhaften von Rückständen an dem Preßstempel praktisch völlig vermieden werden kann, so daß auf das bisher übliche häufige Reinigen des Preßstempels weitgehend verzichtet werden kann.

Ganz besonders vorteilhaft ist die Verwendung eines pulverförmigen Trennmittels, da das Einbringen des Trennmittels in die Preßform dann keine zusätzlich apparative Ausgestaltung der Preßvorrichtung erfordert, sondern mit den ohnehin für das Einbringen der zu pressenden Pulvermasse vorhandenen Einrichtungen durchgeführt werden kann. Das in Pulverform eingebrachte Trennmittel verbindet sich beim Pressen mit der Pulvermasse und bildet einen dünnen Überzug an der Oberfläche des durch Pressen hergestellten Formkörpers.

Vorzugsweise wird als Trennmittel ein Pulver aus einem elektrisch leitfähigen Material verwendet. So kommt beispielsweise reines Graphit als Trennmittel in Frage. Ganz besonders vorteilhaft ist es, wenn als Trennmittel ein Material mit sehr hoher elektrischer Leitfähigkeit, wie z.B. Kupfer, verwendet wird. Wenn eine Trennmittelschicht als Kupferpulver aufgebracht wird, bevor ein elektrisches Anschlußkabel durch die Trennschicht hindurch in die Pulvermasse eingeführt und dann mit dieser verpreßt wird, so wird als zusätzlicher vorteilhafter Effekt eine deutliche Verringerung des Kontaktwiderstandes zwischen dem Schleifkörper und dem darin eingepreßten Anschlußleiter erzielt.

In einer alternativen Ausgestaltung der Erfindung kann als Trennmittel auch ein folienförmiges Material verwendet werden. Dieses kann entweder nach dem Preßvorgang von dem gepreßten Formkörper entfernt werden, bevor dieser wärmebehandelt wird, oder es kann an dem Formkörper verbleiben und zusammen mit diesem der Wärmebehandlung ausgesetzt werden. In letzterem Fall muß dafür gesorgt werden, daß das Trennmaterial keine Bestandteile enthält, die bei der Wärmebehandlung freigesetzt werden und in den gepreßten Formkörper eindringen und z.B. dessen Porosität verändern. Denkbar wäre es z.B., als Trennmittel Papier zu verwenden, welches bei der anschließenden Wärmebehandlung im wesentlichen rückstandsfrei verbrennt.

Eine Ausführungsform der Erfindung wird anhand der Zeichnung näher erläutert.

Fig. 1 zeigt schematisch einen Schnitt durch eine Preßform während der Herstellung des Schleifkörpers nach dem erfindungsgemäßen Verfahren.

Fig. 2 zeigt schematisch den gemäß Fig. 1 hergestellten fertigen Schleifkörper.

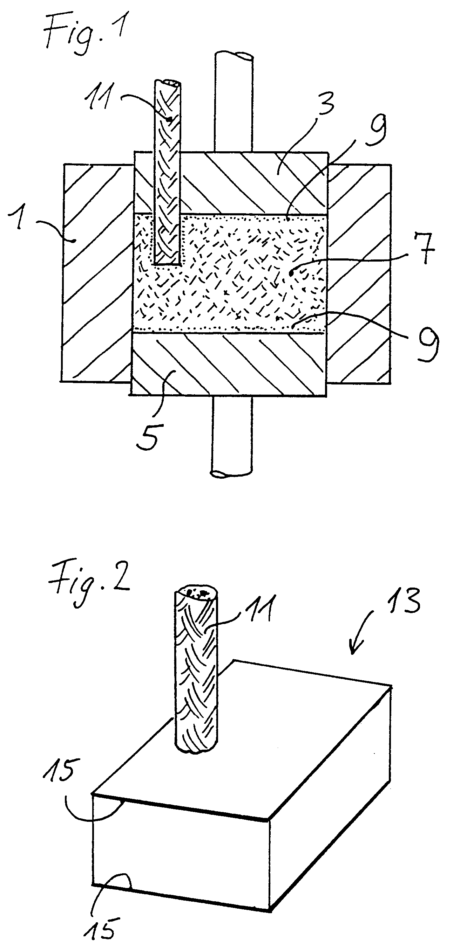

Gemäß Fig. 1 besteht die Preßvorrichtung aus einer Matrize 1 und einem oberen und unteren Preßstempel 3, 5. Bei Betrieb der Vorrichtung wird in der Matrize 1 zwischen den Preßstempeln 3, 5 eine Pulvermasse 7 eingefüllt und durch Beaufschlagung der Preßstempel 3, 5 mit einer Preßkraft zu einem Formkörper verpreßt. Das Grundmaterial der Pulvermasse 7 ist Graphit, das mit einem pulverförmigen Kunstharz, z.B. Phenolharz, als Bindemittel vermischt ist. Zur Verbesserung der Leitfähigkeit des Schleifkörpers kann die Pulvermasse zusätzlich pulverförmiges Kupfer enthalten. Eine typische Zusammensetzung der Pulvermasse 7 umfaßt z.B. 42% Kupfer, 14% Phenolharz, Rest Graphit.

Vor dem Einfüllen der zu pressenden Pulvermasse 7 wird auf die Oberfläche des unteren Preßstempels 7 eine dünne Schicht eines pulverförmigen Trennmittels 9 aufgebracht, und nach dem Einfüllen der Pulvermasse 7 wird auf deren Oberfläche ebenfalls eine dünne Schicht 9 des Trennmittels aufgebracht, bevor der obere Preßstempel 3 aufgesetzt wird. Vorzugsweise besteht das Trennmittel 9 aus pulverförmigen Kupfer. Das Trennmittel 9 verhindert, daß beim Pressen durch die Reibungshitze erweichte Anteile des Kunstharzbindemittels der Pulvermasse 7 an den Preßstempeln 3, 5 festkleben.

Vorzugsweise ist der obere Preßstempel 7 so ausgestaltet, daß mit dem Aufsetzen des Preßstempels 3 auf die Pulvermasse 7 gleichzeitig das Ende eines Anschlußkabels 11 in die Pulvermasse 7 eingeführt und dann mit dieser verpreßt wird. Beim Einführen des Anschlußkabels 11 in die Pulvermasse 7 muß dieses die Trennmittelschicht 9 durchdringen, wobei Teile des Trennmittels mitgenommen werden und sich auch um das Ende des Anschlußkabels 11 herum eine dünne Trennmittelschicht bildet.

Nach dem Pressen wird der Formkörper aus der Preßform herausgenommen und einer Wärmebehandlung unterzogen, durch die das Kunstharzbindemittel in der gepreßten Pulvermasse 7 erweicht wird und in einer Art Sinterprozeß eine Verklebung und Verfestigung der gepreßten Pulvermasse zum fertigen Schleifkörper bewirkt. Die Temperaturen für diesen Kunstharz-Sinterungsprozeß liegen üblicherweise im Bereich von 400-800°C.

Fig. 2 zeigt den fertigen Schleifkörper 13, der an seiner oberen und unteren Fläche je eine aus der Trennmittelschicht 9 von Fig. 1 entstandene, sehr dünne (z.B. wenige 1/100 mm) Schicht 15 aus reinem Kupfer aufweist, während die senkrechten Seitenflächen direkt von dem aus Graphit und Kupfer gemischten Pulvermaterial 7 gebildet sind. Der in den Schleifkörper 13 eingepreßte Endteil des Anschlußkabels 11 ist, wie erwähnt, ebenfalls mit einem dünnen Schicht des Trennmittels umgeben, die den Grenzflächenkontakt zwischen dem Anschlußkabel 11 und dem Schleifkörper 13 verbessert. Es wurde überraschenderweise gefunden, daß selbst dann, wenn das Anschlußkabel 11 aus reinem Kupfer besteht, durch das zusätzliche Vorhandensein des als Trennmittel dienenden Kupferpulvers beim Verpressen der Kontaktwiderstand zwischen dem Anschlußkabel 11 und dem Schleifkörper 13 mehr als halbiert werden kann.

Während bei der vorstehenden bevorzugten Ausführungsform Kupferpulver als Trennmittel verwendet wird, können wie oben erwähnt auch zahlreiche andere Materialien, pulverförmig oder auch folienförmig, als Trennmittel dienen. Zu fordern ist, daß das Trennmittel frei von Kunstharz oder anderen Bestandteilen ist, die beim Pressen, insbesondere aufgrund Reibungswärme, am Preßstempel anhaften können, und daß es andererseits keine Bestandteile enthält, die beim Pressen und insbesondere bei der anschließenden Wärmebehandlung die Eigenschaften des Schleifkörpers, wie z.B. Leitfähigkeit, Porosität usw., nachteilig beeinflussen. Alle am fertigen Produkt verbleibenden Anteile des Trennmittels dürfen dessen Betriebseigenschaften nicht beeinträchtigen, d.h. zu dem Grundmaterial des Schleifkörpers nicht "artfremd" sein.

## Patentansprüche

1. Verfahren zum Herstellen von Schleifkörpern für elektrische Kollektoren, Kontaktbürsten, Stromabnehmer od.dgl., bei dem eine Pulvermasse (7), die mindestens Graphit und ein Kunstharzbindemittel enthält, in einer Preßform (1) mit mindestens einem Preßstempel (3) zu einem Formkörper gepreßt und der Formkörper anschließend bei einer Sintertemperatur, bei der das Bindemittel erweicht und die Pulvermasse bindet, wärmebehandelt wird, dadurch **gekennzeichnet,** daß eine Schicht eines kunstharzfreien Trennmittels (9) zwischen der Pulvermasse und dem Preßstempel (3, 5) angeordnet wird.

2. Verfahren nach Anspruch 1 , dadurch **gekennzeichnet,** daß das Trennmittel (9) ein Pulver aus einem sich bei der Sintertemperatur nicht verändernden Material ist.

3. Verfahren nach Anspruch 2 , dadurch **gekennzeichnet**, daß das Trennmittel ein elektrisch leitfähiges Material ist.

4. Verfahren nach Anspruch 3 , dadurch **gekennzeichnet,** daß das Trennmittel pulverförmiges Kupfer oder Graphit oder eine Mischung aus beiden ist.

5. Verfahren nach einem der Ansprüche 1 bis 4 , dadurch **gekennzeichnet,** daß nach dem Aufbringen der Trennmittelschicht (9) ein elektrisches Anschlußkabel (11) durch die Trennmittelschicht (9) hindurch in die Pulvermasse (7) eingeführt und mit dieser verpreßt wird.

6. Verfahren nach Anspruch 1 , dadurch **gekennzeichnet,** daß das Trennmittel eine folienförmiges Material ist.

7. Verfahren nach Anspruch 6 , dadurch **gekennzeichnet,** daß das Trennmittel Papier ist.

## Claims

1. A method of producing sliding members for electric commutators, contact brushes, current collectors or the like, in which a powder composition (7), which contains at least graphite and a synthetic resin binder, is compressed in a pressing mould (1) with at least one press die (3) to form a moulded article and the moulded article is subsequently heat-treated at a sintering temperature at which the binder softens and binds the powder composition, characterised in that a layer of release agent (9), which is free of synthetic resin, is provided between the powder composition and the press die (3, 5).

2. A method according to Claim 1, characterised in that the release agent (9) is a powder of a material which does not alter at the sintering temperature.

3. A method according to Claim 2, characterised in that the release agent is an electrically conductive material.

4. A method according to Claim 3, characterised in that the release agent is powdered copper or graphite, or a mixture of both.

5. A method according to any one of Claims 1 to 4, characterised in that after applying the layer of release agent (9) an electric connecting cable (11) is introduced through the layer of release agent (9) into the powder composition (7) and is press-moulded therewith.

6. A method according to Claim 1, characterised in that the release agent is a laminar material.

7. A method according to Claim 6, characterised in that the release agent is paper.

## Revendications

1. Procédé de fabrication de corps frottants pour collecteurs électriques, balais de contact, prises de courant ou similaires, dans lequel une masse de poudre (7), qui contient au moins du graphite et un liant de résine synthétique, est transformée en un corps moulé par compression dans un moule (1) comportant au moins un fouloir de presse (3), et le corps moulé est ensuite traité par la chaleur à une température de frittage à laquelle le liant se ramollit et lie la masse de poudre, caractérisé en ce qu'une couche d'un agent de séparation (9) dépourvu de résine synthétique est interposée entre la masse de poudre et le fouloir de presse (3,5).

2. Procédé selon la revendication 1, caractérisé en ce que l'agent de séparation (9) est une poudre d'une matière qui ne subit pas de modification à la température de frittage.

3. Procédé selon la revendication 2, caractérisé en ce que l'agent de séparation est une matière électroconductrice.

4. Procédé selon la revendication 3, caractérisé en ce que l'agent de séparation est du cuivre ou du graphite en poudre ou un mélange des deux.

5. Procédé selon l'une quelconque des revendications 1 à 4, caractérisé en ce qu'après l'application de la couche d'agent de séparation (9), un câble de raccordement électrique (11) est introduit à travers la couche d'agent de séparation (9) dans la masse de poudre (7) et est pressé avec celle-ci.

6. Procédé selon la revendication 1, caractérisé en ce que l'agent de séparation est une matière en forme de feuilles.

7. Procédé selon la revendication 6, caractérisé en ce que l'agent de séparation est du papier.
